**Europäisches Patentamt**

**European Patent Office**

**Office européen des brevets**

(19)

(11) **EP 1 341 246 A2**

(12) # EUROPEAN PATENT APPLICATION

(43) Date of publication:
**03.09.2003 Bulletin 2003/36**

(51) Int Cl.$^7$: **H01M 4/02**, H01M 4/04, H01M 4/62, H01M 4/48

(21) Application number: **03004313.7**

(22) Date of filing: **27.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **28.02.2002 JP 2002053310**

(71) Applicant: **Sumitomo Chemical Company, Limited**
**Chuo-ku Osaka 541-8550 (JP)**

(72) Inventors:
- **Okada, Akihiko**
  **Tsukuba-shi, Ibaraki (JP)**
- **Hamamatsu, Hiroshi**
  **Tsukuba-shi, Ibaraki (JP)**
- **Nakane, Kenji**
  **Tsukuba-shi, Ibaraki (JP)**

(74) Representative: **VOSSIUS & PARTNER**
**Siebertstrasse 4**
**81675 München (DE)**

(54) **Electrode material for non-aqueous secondary battery**

(57) Provided is an electrode material for non-aqueous secondary batteries which comprises an active material coated with a coating material containing a coating compound comprising Al and O, where peaks of $^{27}$Al of solid NMR measured by spinning a sample of the coating material about a magic angle axis satisfy specific conditions, and a non-aqueous secondary battery containing the electrode material is further provided.

**EP 1 341 246 A2**

**Description**

The present invention relates to an electrode material for non-aqueous secondary batteries and a non-aqueous secondary battery using the same.

With recent rapid development of electronic devices of portable or cordless type, non-aqueous secondary batteries which are smaller in size and lighter in weight are being progressively developed. Among them, lithium secondary batteries have already been put to practical use as electric sources of portable telephones and notebook type personal computers, and furthermore it has been attempted to make them larger in size and higher in output for electric sources of electric cars. However, since non-aqueous electrolyte solutions comprising a salt dissolved in a combustible organic solvent or combustible polymer electrolytes are used in non-aqueous secondary batteries, it has been earnestly desired to develop electrode materials which are improved particularly in safety while maintaining high discharge capacity and good cycle characteristics (less in deterioration of discharge capacity after repetition of charging and discharging).

In order to reduce generation of heat when active materials are heated, investigation has been conducted on composition of a compound as an active material for positive electrode materials. For example, a part of nickel of lithium nickelate is replaced with aluminum to convert it to $LiAl_{1/4}Ni_{3/4}O_2$ as disclosed in Journal of Electrochemical Society, vol. 142 (1995), pages 4033-4038. However, the conventional active materials have but the active material has the problems of reduction in discharge capacity and deterioration in cycle characteristics.

An object of the present invention is to provide an electrode material which can further improve the safety while maintaining discharge capacity and cycle characteristics of non-aqueous secondary battery and a non-aqueous secondary battery using the above electrode material.

As a result of intensive research conducted by the inventors on the electrode materials, it has been found that in the case of using an electrode material in which a part or the whole of the surface of an active material is coated with a coating material which comprises a compound containing aluminum and oxygen and has peaks of a solid nuclear magnetic resonance spectrum which satisfy specific conditions, safety of non-aqueous secondary batteries can be improved with maintaining the capacity and the cycle characteristics of the non-aqueous secondary batteries. Thus, the present invention has been accomplished.

That is, the present invention provides an electrode material for non-aqueous secondary batteries which comprises an active material for non-aqueous secondary batteries and a coating material, wherein at least a part of the active material is coated with the coating material, the coating material comprises a compound containing at least aluminum and oxygen, and a peak originating from aluminum 27 in a solid nuclear magnetic resonance spectrum (hereinafter sometimes referred to as "MAS-NMR spectrum") which is measured by spinning a sample of the coating material about a magic angle axis satisfies the conditions shown in the following (1) and (2):

(1) when the chemical shift of a main peak of $\alpha$-alumina is assumed to be 0 ppm, there is one main peak at -3 - +5 ppm (referred to as "main peak A"), and intensity of a main peak at 50 - 100 ppm (referred to as "main peak B") is less than 20% of intensity of the main peak A or the main peak B is not present, and
(2) when measurement is conducted with spinning the sample so that an interval between a main peak and its nearest spinning sideband is in the range of not less than 50 ppm and not more than 100 ppm, a value obtained by dividing the intensity of the nearest spinning sideband on higher magnetic field of the main peak A by intensity of the main peak A (hereinafter, the value sometimes being referred to as "R") is not less than 9 times compared with a value obtained by dividing intensity of the nearest spinning sideband of higher magnetic field on a main peak obtained by subjecting $\alpha$-alumina to measurement at identical magnetic field and identical spinning frequency as in measurement of the sample by intensity of main peak of $\alpha$-alumina (hereinafter, the value sometimes being referred to as "r").

Furthermore, the present invention provides an electrode material in which the coating material in the electrode material may contain an alkali metal element and/or a transition metal element in addition to aluminum and oxygen, and in this case the molar ratio of all metals other than aluminum and alkali metal to aluminum which is obtained by photoelectron spectroscopic method is not more than 2.0.

Moreover, the present invention provides a non-aqueous secondary battery made using the electrode material for non-aqueous secondary batteries which is mentioned above.

Further, the present invention provides a method for producing the electrode material mentioned above which comprises coating particles of active material for non-aqueous secondary batteries with metallic Al or a compound containing Al, and then heat-treating the coated particles.

Next, the present invention will be explained in detail below.

In the electrode material of the present invention, the coating material for active material comprises a compound containing aluminum and oxygen. If the coating material comprises a compound containing no aluminum, the safety of batteries manufactured using the electrode material containing the active material coated with the coating material cannot be improved, although the reason is not clear.

The coating material in the electrode material of the present invention is such that when a solid nuclear magnetic resonance spectrum is measured by spinning a sample of the coating material about a magic angle axis, the peak originating from aluminum 27 (an isotope of aluminum having an atomic weight of 27) satisfies the conditions shown in the following (1) and (2).

(1) When the chemical shift of a main peak of $\alpha$-alumina is assumed to be 0 ppm, there is one main peak at -3 - +5 ppm (main peak A), and intensity of a main peak present at 50 - 100 ppm (main peak B) is less than 20% of the intensity of the main peak A or the main peak B is not present.

(2) When measurement is conducted with spinning the sample so that an interval between a main peak and its nearest spinning sideband is in the range of not less than 50 ppm and not more than 100 ppm, a value (R) obtained by dividing the intensity of the nearest spinning sideband of higher magnetic field on the main peak A by the intensity of the main peak A is not less than 9 times compared with a value (r) obtained by dividing the intensity of the nearest spinning sideband on higher magnetic field of the main peak obtained by subjecting $\alpha$-alumina to measurement at the identical magnetic field and the identical spinning frequency as in the above measurement by the intensity of the main peak of $\alpha$-alumina.

The coating material in the electrode material of the present invention gives a MAS-NMR spectrum which is peculiar to aluminum 27 as shown below.

The measurement of MAS-NMR spectrum of the coating material of the present invention is carried out by spinning a sample about a magic angle axis. In the measurement, a MAS-NMR peak detected at the same position irrespective of the spinning frequency is called a main peak. It is known that the position of the main peak in the spectrum shows a definite value regardless of intensity of static magnetic field used for measurement. It is necessary that the MAS-NMR spectrum of aluminum 27 given by the coating material of the present invention has one main peak (main peak A) at -3 - +5 ppm on the basis of the chemical shift of main peak of $\alpha$-alumina, and the intensity of a main peak at 50-100 ppm (main peak B) is less than 20% of the intensity of the main peak A. When other main peaks are present, the intensity is preferably less than 10% of the intensity of the main peak A, and more preferably the other main peaks including the main peak B are not present.

Here, the intensity of MAS-NMR peak is a height of vertex of the peak with respect to the baseline of the spectrum. For accurate measurement of the intensity of NMR peaks, it is preferred to carry out sufficient integration and make the baseline flat by performing baseline correction. The correction of the baseline can be performed by known methods, and, for example, spline function of the first degree to the sixth degree can be used, and the methods are not particularly limited.

In the measurement of ratio of intensity of the main peaks, it is preferred to carry out the measurement under such conditions that the main peak B and the spinning sidebands of the main peak A do not overlap each other. That is, when a magnetic field of, for example, 7.05 tesla is used as the static magnetic field, the spinning frequency of the sample is preferably 10,000 Hz or more.

Next, the spinning sidebands mean a group of MAS-NMR peaks which are observed at intervals proportioned to the spinning frequency on both sides of a main peak. Among them, the nearest spinning sidebands mean peaks adjacent to the main peak, namely, closest to the main peak among the peaks apart from the main peak at intervals proportioned to the spinning frequency of the sample. The intensity ratios of the main peak and the nearest spinning sidebands vary depending on the intensity of the magnetic field used for measurement, the spinning frequency of the sample and temperature, but in the case of a solid is the same composition and the same state, it is known that the intensity ratios show definite values at the same magnetic field, the same spinning frequency of the sample and the same temperature. The definite values can be obtained by the measurement at room temperature.

The MAS-NMR spectrum of aluminum 27 given by the coating material of the present invention is such that when measurement is conducted while spinning the sample so that the interval between a main peak and its nearest spinning sideband is in the range of not less than 50 ppm and not more than 100 ppm, the ratio (R) of the intensity of the main peak A and the intensity of the nearest spinning sideband on higher magnetic field of the main peak A is not less than 9 times compared with the ratio (r) of the intensity of the main peak in the spectrum of $\alpha$-alumina obtained in the same manner as above by the measurement at the identical magnetic field and the identical spinning frequency and the intensity of the nearest spinning sideband on higher magnetic field of the main peak (namely, $R/r \geqq 9$). When a magnetic field of 7.05 tesla is used as the static magnetic field, as the conditions under which the spinning sidebands are observed at the above-mentioned position, there may be exemplified the measurement condition of 5000-6000 Hz.

Any $\alpha$-alumina can be used here for comparison irrespective of the production method as long as it has a purity of 99.99% or higher and a specific surface area of 2-10 $m^2/g$ according to BET method, and is in the form of particles having only the crystal structure of $\alpha$-alumina. Particularly preferred are particles of 0.2-2 $\mu$m in average

particle diameter.

The MAS-NMR spectrum of aluminum 27 of the coating material in the electrode material of the present invention can be measured after the coating material is isolated from the active material, but in the following cases, the measurement can also be performed without isolating the coating material from the active material, namely, in case aluminum is not contained in the active material, or in case a material having paramagnetism or ferromagnetism (Ni, Co, Mn, etc.) is present in a large amount in the active material, even if aluminum is contained. In the latter case, as shown in Comparative Example 1 given hereinafter, the NMR peak of aluminum 27 present in the active material has a very wide line and the peak cannot be detected by the measuring method employed in the present invention. Therefore, even when an electrode material in which a part or the whole of the surface of the active material is coated with the coating material is used as a sample, and measurement of MAS-NMR of aluminum 27 of the coating material is conducted as it is, spectrum of the coating material can be obtained.

It is preferred that the coating material in the electrode material of the present invention contains an alkali metal element and/or a transition metal element after being coated. Examples of the alkali metal element are Li, Na and K, and Li is preferred. The transition metal element means an atom having an incompletely filled shell d or an element producing such cation, and examples thereof are Ti, V, Cr, Mn, Fe, Co, Ni, Cu, Ag and Zn. The coating material in the electrode material of the present invention may contain one or more of them, and preferably contains two or more of Mn, Co and Ni.

In the coating material for the electrode material of the present invention, the molar ratio of all metals other than aluminum and alkali metal to aluminum which is obtained by photoelectron spectroscopic method is preferably not more than 2.0 because heat generation of the active material upon being heated diminishes, and more preferably not more than 0.5.

The molar ratio of all metals other than aluminum and alkali metal to aluminum which is obtained by photoelectron spectroscopic method is a ratio of the sum of photoelectron intensities of all metals other than aluminum and alkali metal to the photoelectron intensity of $Al_{2S}$. The photoelectron intensity can be measured by known methods, and, if necessary, it can be obtained by peak-fitting analysis.

Since the photoelectron spectrum is reflective of the composition of the vicinity of the surface, the molar ratio of all metals other than aluminum and alkali metal to aluminum of not more than 2.0 indicates that the amounts of the metals other than aluminum and the alkali metal are less in the coating material after being coated. The photoelectron spectrum is affected by the coating ratio of the coating material on the active material, but the composition of the coating material can be evaluated in the following manner.

In the case of using as a sample an active material, the whole surface of which is coated with coating material, contribution of the active material to the photoelectron spectrum can be mostly ignored because the photoelectron spectrum reflects only the state of almost the surface of the active material. Therefore, the molar ratio of all metals other than aluminum and alkali metal to aluminum in the active material, the whole surface of which is coated with coating material, which is obtained by photoelectron spectroscopy is nearly the same as the molar ratio in the coating material.

On the other hand, in the case of using an active material a part of the surface of which is coated with the coating material, contribution of the active material to the photoelectron spectrum depends on the coating ratio (hereinafter referred to as "X") of the coating material on the active material. A found value Y of the molar ratio (obtained by photoelectron spectroscopy) of all metals other than aluminum and alkali metal to aluminum of the active material a part of the surface of which is coated with the coating material has the relation shown by the following formula with the molar ratio $Y_0$ of all metals other than aluminum and alkali metal to aluminum of the coating material and the molar ratio $Y_1$ of all metals other than aluminum and alkali metal to aluminum of the active material.

$$Y = X \times Y_0 + (1 - X) \times Y_1 \qquad (0<x<1)$$

When content of aluminum in the active material is low, and especially when $Y_1$ is more than 2.0, $Y_0$ is not more than 2.0 irrespective of the value of X in case the found value Y is not more than 2.0. Therefore, under the conditions of the content of aluminum in the active material being low and $Y_1$ being more than 2.0 as above, if a found value of the molar ratio of all metals other than aluminum and alkali metal to aluminum which is obtained by photoelectron spectroscopic method using as a sample an active material the whole or a part of the surface of which is coated with the coating material is not more than 2.0, the molar ratio of all metals other than aluminum and alkali metal to aluminum of the coating material which is obtained by photoelectron spectroscopic method is not more than 2.0 irrespective of the degree of coating, which is preferred. Furthermore, when $Y_1$ is more than 0.5, if a found value Y of the molar ratio of all metals other than aluminum and alkali metal to aluminum which is obtained by photoelectron spectroscopic method using as a sample an active material the whole or a part of the surface of which is coated with the coating material is not more than 0.5, the molar ratio of all metals other than aluminum and alkali metal to aluminum of the coating material which is obtained by photoelectron spectroscopic method is not more than 0.5 irrespective of the degree of coating, which is more preferred.

The active material used in the present invention is a compound capable of doping an alkali metal ion therein and undoping an alkali metal ion therefrom.

Examples of the compound capable of doping an alkali metal ion therein and undoping an alkali metal ion therefrom are composite chalcogen compounds such as oxides and sulfides containing Li and transition metals, composite chalcogen compounds such as oxides and sulfides containing Na and transition metals, and the like. Of these compounds, as compounds used as active materials of lithium secondary batteries, preferred are composite oxides containing Li and transition metals, for example, lithium cobaltate, lithium nickelate, lithium manganate, compounds having $\alpha$-NaFeO$_2$ type crystal structure and containing Li and at least one selected from the group consisting of Ni, Co and Mn, composite oxides having a spinel type crystal structure and containing Li and Mn, composite oxides having a spinel type crystal structure and containing Li and Mn, a part of which is replaced with other element, composite oxides of lithium and titanium, such as Li$_x$Ti$_2$O$_4$ and Li$_{4/3}$Ti$_{5/3}$O$_4$, composite oxides of lithium and vanadium, such as Li$_x$V$_2$O$_4$, Li$_x$V$_2$O$_5$ and Li$_x$V$_6$O$_{13}$, composite oxides of lithium and chromium such as Li$_x$Cr$_3$O$_8$, and composite oxides of lithium and iron such as Li$_x$Fe$_5$O$_8$, and more preferred are compounds having $\alpha$-NaFeO$_2$ type crystal structure and containing Li and at least one selected from the group consisting of Ni, Co and Mn, and composite oxides having a spinel type crystal structure and containing Li and Mn.

The method for producing the particles of the compounds capable of doping alkali metal ions therein and undoping alkali ions therefrom has no special limitation, and known methods can be employed, and, for example, there may be employed a method of mixing starting compounds containing constitutive elements of the particles of the compounds capable of doping alkali metal ions therein and undoping alkali ions therefrom and then firing the mixture.

As the method for producing the electrode material of the present invention, there may be used a method which comprises coating an active material with metallic Al or a compound containing Al and then heat-treating the coated active material. As the compounds containing Al, mention may be made of, for example, oxides, hydroxides, oxyhydroxides, sulfates, carbonates, nitrates, acetates, chlorides, organometallic compounds and alkoxides of Al, and the compounds are not limited to these examples.

As the method of the coating treatment, there may be used a method which comprises dissolving the compound containing Al in water or an organic solvent, dispersing in the solution the particles of the compound to be coated and then drying the dispersion, a method which comprises dispersing the compound containing Al together with the active material powders to be coated in water or an organic solvent, and then drying the dispersion, a method which comprises depositing metallic Al or the compound containing Al on the surface of the active material by CVD or vapor deposition, and a method which comprises mixing metallic Al or fine particles containing Al with the active material.

Among these methods, the method of mixing fine particles containing Al with the active material is industrially preferred because commercially available materials can be used. The mixing method has no special limitation, and there may be employed known methods such as a method of dry mixing them using a mixing machine such as a mill, and a method of wet mixing them using a suspension in water, alcohol or the like (not limited). Industrially, the dry mixing method is preferred. The dry mixing method using a mixing machine, preferably a ball mill is more preferred.

As the fine particles containing Al, those which are superior in dispersibility are preferred, and fine particles of transition alumina obtained by thermal decomposition of an aluminum compound such as aluminum chloride are especially preferred since they are superior in dry dispersibility.

The heat treatment includes, for example, firing for the reaction of metallic Al or the compound containing Al, drying for dehydration, and heating for phase transition or improvement of crystallinity, and the heat treatment may comprise a plurality of steps.

As to the atmosphere for the heat treatment, it can be carried out, for example, in air, oxygen, nitrogen, carbon dioxide, water vapor, nitrogen oxide, hydrogen chloride, hydrogen sulfide or mixed gas thereof or under reduced pressure, and these are not limiting the invention and the atmosphere can be selected depending on the metallic Al or the compound containing Al used for coating.

In case when using an active material synthesized by firing, it is preferable that the heat treatment time after coating the active material is shorter than the heat treatment time which is required for synthesizing the active material. Namely, it is preferable that the heat treatment time after coating the active material is preferably one-half or less, more preferably one-fifth or less compared with the heat treatment time which is required for synthesizing the active material.

Further, it is preferable that the heat treatment temperature after coating the active material is lower than the temperature which is required for synthesizing the active material. Namely, it is preferable that the heat treatment temperature after coating the active material is lower than 5°C or more compared with the heat treatment temperature which is required for synthesizing the active material.

The electrode material of the present invention is for non-aqueous secondary batteries, and can be used not only for positive electrode, but also for negative electrode. Suitable constitution for making batteries will be explained, taking the case where the electrode material is used for positive electrode of lithium secondary batteries.

A positive electrode for lithium secondary battery which is one embodiment of the present invention can be produced by supporting on a positive electrode current collector a positive electrode mix containing the electrode material of the present invention and furthermore a carbonaceous material as a conductive material, a thermoplastic resin as a binder, or the like.

As the carbonaceous material, mention may be made of natural graphite, artificial graphite, cokes, carbon black, etc. These can be used as conductive material each alone or as composite conductive materials comprising, for example, a mixture of artificial graphite and carbon black.

Examples of the thermoplastic resins used as binders are poly(vinylidene fluoride) (hereinafter sometimes referred to as "PVDF"), polytetrafluoroethylene (hereinafter sometimes referred to as "PTFE"), tetrafluoroethylene-hexafluoropropylenevinylidene fluoride copolymer, hexafluoropropylenevinylidene fluoride copolymer, and tetrafluoroethyleneperfluorovinyl ether copolymer. These may be used each alone or in admixture of two or more.

Furthermore, when a fluororesin and a polyolefin resin as binders are used in combination with the positive electrode active material of the present invention so that the proportion of the fluororesin in the positive electrode mix is 1-10% by weight and that of the polyolefin is 0.1-2% by weight, adhesion to the current collector is excellent and safety against external heating such as heating test is further improved. Thus, this embodiment is preferred.

Al, Ni, stainless steel, etc. can be used as a positive electrode current collector, and Al is preferred because it can be easily worked to a thin sheet and is inexpensive. As method for supporting the positive electrode mix on the positive electrode current collector, mention may be made of a method of pressure molding, a method of pasting the positive electrode mix using a solvent or the like, coating the paste on the current collector, drying the coat and then pressing the collector to adhere the coat.

As the negative electrode material of lithium secondary battery which is one embodiment of the present invention, there may be used, for example, lithium metal, lithium alloys or materials capable of doping lithium ion therein and undoping lithium ion therefrom. As the materials capable of doping lithium ion therein and undoping lithium ion therefrom, mention may be made of, for example, carbonaceous materials such as natural graphite, artificial graphite, cokes, carbon black, pyrolytic carbons, carbon fibers, and fired products of organic polymer compounds; chalcogen compounds such as oxides and sulfides capable of doping lithium ion therein and undoping lithium ion therefrom at a potential lower than that of positive electrode; etc.

In the case of using in combination with a liquid electrolyte, when a negative electrode containing poly(ethylene carbonate) is used, cycle characteristics and high current discharging characteristics are improved, which is preferred.

The form of the carbonaceous materials may be any of, for example, flaky form such as of natural graphite, spherical form such as of mesocarbon microbeads, fibrous form such as of graphitized carbon fibers, or fine powder aggregates, and, if necessary, a thermoplastic resin as a binder may be added thereto. The thermoplastic resin includes, for example, PVDF, polyethylene and polypropylene.

The chalcogen compounds such as oxides and sulfides used as negative electrode include, for example, oxides of the elements of Groups 13, 14 and 15 of the periodic table. To these compounds, there may also be added carbonaceous materials as conductive materials and thermoplastic resins as binders.

As a negative electrode current collector, Cu, Ni, stainless steel, etc. can be used, and Cu is preferred in lithium secondary battery because it can hardly form alloys with lithium and, besides, can be easily worked to a thin sheet. As methods for supporting the negative electrode mix on the negative electrode current collector, mention may be made of a method of pressure molding, a method of pasting the negative electrode mix using a solvent or the like, coating the paste on the current collector, drying the coat and then pressing the collector to adhere the coat.

As a separator used in a lithium secondary battery which is one embodiment of the present invention, there may be used nonwoven fabrics and woven fabrics of, for example, fluororesins; polyolefins such as polyethylene and polypropylene; nylon, aromatic aramid, etc. Thickness of the separator is as thin as possible so far as mechanical strength can be maintained for increasing volume energy density of the battery and decreasing internal resistance, and is preferably about 10-200 $\mu$m.

As an electrolyte used in a lithium secondary battery which is one embodiment of the present invention, there may be used known electrolytes selected from solid electrolytes and non-aqueous electrolyte solution prepared by dissolving a lithium salt in an organic solvent. As the lithium salt, mention may be made of, for example, one or more of $LiClO_4$, $LiPF_6$, $LiAsF_6$, $LiSbF_6$, $LiBF_4$, $LiCF_3SO_3$, $LiN(CF_3SO_2)_2$, $LiC(CF_3SO_2)_3$, $Li_2B_{10}Cl_{10}$, lithium salts of lower aliphatic carboxylic acids, and $LiAlCl_4$.

As the organic solvent used in a lithium secondary battery which is one embodiment of the present invention, there may be used carbonates such as propylene carbonate, ethylene carbonate, dimethyl carbonate, diethyl carbonate, ethylmethyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran and 2-methyltetrahydrofuran; esters such as methyl formate, methyl acetate and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide and 1,3-propanesultone, and these organic solvents into which a fluorine substituent is further introduced. Generally, two or more of them are used in admixture. Among them, mixed solvents containing carbonates are preferred, and more preferred are mixed solvents of cyclic carbonates and non-cyclic carbonates or mixed solvents of cyclic carbonates and ethers.

As the mixed solvents of cyclic carbonates and non-cyclic carbonates, those which contain ethylene carbonate, dimethyl carbonate and ethylmethyl carbonate are preferred because they have a wide operating temperature range, are excellent in loading characteristics and are hardly decomposed even when graphite materials such as natural graphite and artificial graphite are used as the active material of negative electrode.

Furthermore, when the particles of the compound capable of doping alkali metal ion therein and undoping alkali metal ion therefrom have $\alpha$-NaFeO$_2$ type crystal structure containing lithium and nickel and/or cobalt and/or Mn, particularly excellent effect to improve the safety can be obtained, and for this reason, it is preferred to use a lithium salt containing fluorine such as LiPF$_6$ and/or an electrolyte containing an organic solvent having a fluorine substituent. Mixed solvents containing ethers having a fluorine substituent, such as pentafluoropropylmethyl ether and 2,2,3,3-tetrafluoropropyldifluoromethyl ether, and dimethyl carbonate are more preferred since they are superior also in high current discharging characteristics.

As solid electrolytes, there may be used polymer electrolytes such as polyethylene oxide compounds and polymeric compounds containing at least one of polyorganosiloxane chains and polyoxyalkylene chains. Moreover, there may also be used so-called gel type electrolytes comprising a polymer in which non-aqueous electrolyte solution is held. From the viewpoint of further improvement of safety, there may be used sulfide type electrolytes such as Li$_2$S-SiS$_2$, Li$_2$S-GeS$_2$, Li$_2$S-P$_2$S$_5$ and Li$_2$S-B$_2$S$_3$, and inorganic compound type electrolytes containing sulfide, such as Li$_2$S-SiS$_2$-Li$_3$PO$_4$ and Li$_2$S-SiS$_2$-Li$_2$SO$_4$.

The shape of the non-aqueous secondary battery of the present invention is not particularly limited, and may be any of paper type, coin type, cylindrical type, rectangular type, etc.

Having thus generally described the present invention, the following specific examples are provided to illustrate the invention. The examples are not intended to limit the scope of the invention in any manner.

Examples

The present invention will be explained in more detail by the following examples. Production of electrodes for charge and discharge test and flat plate type batteries, measurement of MAS-NMR spectrum of aluminum 27, and photoelectron spectroscopic measurement were conducted by the following methods, unless otherwise notified.

(1) Production of electrodes for charge and discharge test and flat plate type batteries:

A solution of PVDF in 1-methyl-2-pyrrolidone (hereinafter sometimes referred to as "NMP") as a binder was added to a mixture of a compound capable of doping alkali metal ion therein and undoping alkali metal ion therefrom and acetylene black as a conductive material so as to give a composition of electrode material or active material : conductive material : binder = 86 : 10 : 4 (weight ratio), followed by kneading the resulting mixture to prepare a paste. This paste was coated on a #100 stainless steel mesh as a current collector, followed by vacuum drying at 150°C for 8 hours to obtain an electrode.

A flat plate type battery was produced by combining the resulting electrode with an electrolyte solution prepared by dissolving LiPF$_6$ at a concentration of 1 mol/liter in a mixed liquid of ethylene carbonate (hereinafter sometimes referred to as "EC"), dimethyl carbonate (hereinafter sometimes referred to as "DMC") and ethylmethyl carbonate (hereinafter sometimes referred to as "EMC") at 30 : 35 : 35 (hereinafter the electrolyte solution sometimes being referred to as "LiPF$_6$/EC + DMC + EMC"), a polypropylene porous membrane as a separator, and metallic lithium as a counter electrode (negative electrode).

2) Measurement of MAS-NMR spectrum of aluminum 27:

The measurement was conducted at room temperature using CMX-300 type apparatus manufactured by Chemagnetics Co., Ltd. (hereinafter referred to as "condition 1") or ASX-300 type apparatus manufactured by Bruker Analytik GmbH (hereinafter referred to as "condition 2").

Under the condition 1, a sample (0.1 g) was packed in a sample tube of 4 mm in outer diameter and the tube was inserted into the apparatus, and the measurement was conducted with spinning the sample at 5000-15000 spins per second (5-15 kHz). The center frequency of measurement of aluminum 27-NMR was 78.21 MHz, and the spectral width was set at 263 kHz. The pulse width was 4 microseconds. This corresponded to about 45° pulse. The integration was carried out 4096 times, and repetition time of the integration was 3 seconds. Under the condition 2, a sample (0.1-0.7 g) was packed in a sample tube for measurement of 7 mm in outer diameter and the tube was inserted into the apparatus, and the measurement was conducted with spinning the sample at 5000-6000 spins per second. The center frequency of observation of aluminum 27-NMR was 78.15 MHz, and the spectral width was set at 500 kHz. The pulse width was 3 microseconds. This corresponded to about 45° pulse. The integration was carried out 8192 times, and repetition time of the integration was 5 seconds. UA-5055 (trade name) manufactured by Showa Denko K.K. was used as an $\alpha$-alumina standard material.

(3) Photoelectron spectroscopic measurement:

The measurement was carried out under the following conditions using SSX-100 type apparatus manufactured by Surface Science Instruments.

　　　　X-ray: AlK$\alpha$ X-ray (1486.6 eV)
　　　　X-ray spot: 600 $\mu$m
　　　　Charge neutralization method: A neutralization electron gun and an Ni mesh were used.

Comparative Example 1

(1) Synthesis of particles of electrode material:

First, lithium hydroxide was dissolved in deionized water to adjust the pH to about 11, and then aluminum hydroxide was added and dispersed therein. Then, lithium nitrate was dissolved in the dispersion, and subsequently basic nickel carbonate and basic cobalt carbonate were added, respectively, followed by mixing them and grinding the mixture in a flowing tube type mill. The mixing ratio of the respective elements in molar ratio was as follows.

　　　　Li : Al : Co : Ni = 1.03 : 0.05 : 0.10 : 0.85

The resulting slurry was dried by a spray dryer provided with a rotary atomizer to obtain a mixed powder of metal compounds. The feeding temperature of hot air was about 245°C and the temperature of hot air at the outlet of the dryer was about 145°C. The resulting mixed powder of metal compounds was introduced into a tubular oven having an alumina core tube and fired by keeping it in an oxygen stream at 720°C for 15 hours, thereby obtaining particles of a powdery compound (hereinafter referred to as "compound particles C1" which were used as an active material of non-aqueous secondary battery. It was confirmed by powder X-ray diffraction that the resulting compound particles C1 had an $\alpha$-NaFeO$_2$ type structure.

(2) Evaluation of charge and discharge performance when the electrode material was used for positive electrode of lithium secondary battery:

A flat plate type battery was made using the resulting compound particles C1, and was subjected to charge and discharge test by carrying out constant current and constant voltage charging and constant current discharging under the following conditions.

　　　　Maximum charging voltage: 4.3 V, charging time: 8 hours, charging current: 0.5 mA/cm$^2$;
　　　　Minimum discharging voltage: 3.0 V, discharging current: 0.5 mA/cm$^2$.

The discharge capacities at 10th and 20th cycles were 181 and 176 mAh/g, respectively, which showed high capacities and good cycle characteristics.

(3) Evaluation of safety:

For evaluating the safety by examining the reaction behavior when the battery was heated in deeply charged state, measurement of sealed type DSC was carried out in the following manner. First, a flat plate type battery was made using the compound particles C1 as an electrode material in combination with metallic lithium and was subjected to constant current and constant voltage charging under the conditions of a charging voltage of 4.3 V, a charging time of 20 hours and a charging current of 0.4 mA/cm$^2$. Then the battery was disassembled in a glove box of argon atmosphere, and the positive electrode was removed and washed with DMC and dried. Then, the positive electrode mix was scraped from the current collector to obtain a charged positive electrode mix which was used as a sample. Then, 0.8 mg of the charged positive electrode mix was weighed and put in a closed cell made of stainless steel, and 1.5 microliter of a non-aqueous electrolyte solution prepared by dissolving LiPF$_6$ at a concentration of 1 mol/liter in a mixed liquid of ethylene carbonate, vinylene carbonate, dimethyl carbonate and ethylmethyl carbonate at 12 : 3 : 20 : 65 (hereinafter the electrolyte solution sometimes being referred to as "LiPF$_6$/EC + VC + DMC + EMC") was poured into the cell to wet the charged positive electrode mix, followed by closing the cell using a jig.

Subsequently, the stainless steel cell in which the above sample was enclosed was set in DSC220 type DSC apparatus manufactured by Seiko Instruments Inc., and measurement was conducted at a heating rate of 10°C/min.

Based on the sum of the weight of the charged positive electrode mix and the weight of the electrolyte solution, total calorific value was obtained from exothermic peak obtained above, and this was employed as an indication of the safety. When the compound particles C1 were used, it was 590 mJ/mg.

(4) Measurement of MAS-NMR spectrum of aluminum 27:

The results of measurement under the condition 2 are shown in Table 2. In the case of this sample, the main peak A was not observed.

(5) Molar ratio obtained by photoelectron spectroscopic method:

The molar ratio of all metals other than aluminum and alkali metal to aluminum, namely, the molar ratio of nickel and cobalt to aluminum [(Ni + Co)/Al] was 6.7.

Example 1

(1) Synthesis of particles of electrode material:

First, lithium nitrate was dissolved in deionized water, and, subsequently, basic nickel carbonate and basic cobalt carbonate were added to the solution, respectively, followed by mixing well and grinding the mixture in a flowing tube type mill. The mixing ratio of the respective elements in molar ratio was as follows.
Li : Co : Ni = 1.03 : 0.10 : 0.90

The resulting slurry was dried by a spray dryer provided with a rotary atomizer to obtain a mixed powder of metal compounds. The temperature for supplying hot air was about $250°C$ and the temperature of the hot air at the outlet of the dryer was about $150°C$. The resulting mixed powder of metal compounds was introduced into a tubular oven having an alumina core tube and fired by keeping it in an oxygen stream at $720°C$ for 15 hours, thereby to obtain particles of a powdery compound (hereinafter referred to as "compound particles P1") which were used as an active material of non-aqueous secondary battery. It was confirmed by powder X-ray diffraction that the resulting compound particles P1 had an $\alpha$-NaFeO$_2$ type structure.

Then, the compound particles P1 and transition alumina fine particles were weighed so as to give a molar ratio Ni : Al = 0.90 : 0.07 and mixed by a ball mill using nylon-coated steel balls. Then, the resulting mixed powder was introduced into a tubular oven having an alumina core tube and fired in an oxygen stream at $690°C$ for 1 hour, thereby to obtain compound particles coated with a coating material for active material used for non-aqueous secondary battery, namely, a powder (hereinafter referred to as "particles E1") which was an electrode material for non-aqueous secondary battery. It was confirmed by powder X-ray diffraction that the resulting particles E1 maintained the $\alpha$-NaFeO$_2$ type structure. Since the coating material was small in its amount, the structure of the coating material was not detected according to the X-ray diffraction.

(2) Evaluation of charge and discharge performance when the electrode material was used for positive electrode of lithium secondary battery:

A flat plate type battery was made using the resulting particles E1 and was subjected to charge and discharge test by carrying out constant current and constant voltage charging and constant current discharging under the same conditions as in Comparative Example 1.
The discharge capacities at 10th and 20th cycles were 176 and 173 mAh/g, which were slightly lower than in Comparative Example 1, but showed high capacity and good cycle characteristics.

(3) Evaluation of safety:

Measurement of sealed type DSC was conducted in the same manner as in Comparative Example 1, except that particles E1 were used in place of the compound particles C1. The total calorific value based on the sum of the weight of the charged positive electrode mix and the weight of the electrolyte solution was 440 mJ/mg, which was smaller than in the case of using C1, and thus it was seen that the safety was improved.

(4) Measurement of MAS-NMR spectrum of aluminum 27:

The results of measurement under the conditions 1 and 2 are shown in Table 1 and Table 2, respectively. In the case of using this sample, the main peak A was observed at the chemical shift of -1 ppm, but the main peak B was not observed. Furthermore, R/r was 11.1.

(5) Molar ratio obtained by photoelectron spectroscopic method:

The molar ratio of all metals other than aluminum and alkali metal to aluminum, namely, the molar ratio of nickel and cobalt to aluminum [(Ni + Co)/Al] was 0.4.

Comparative Example 2

(1) Synthesis of electrode material:

The compound particles P1 and transition alumina fine particles were weighed so that the molar ratio was Ni : Al = 0.90 : 0.06 and mixed by a method of rotating the container without using nylon-coated steel balls. Then, the resulting mixed powder was introduced into a tubular oven having an alumina core tube and fired by keeping it in an oxygen stream at 720°C for 1 hour, thereby to obtain compound particles coated with a coating material for active material used for non-aqueous secondary battery, namely, a powder (hereinafter referred to as "particles C2") which was an electrode material for non-aqueous secondary battery. It was confirmed by powder X-ray diffraction that the resulting particles C2 maintained the $\alpha$-NaFeO$_2$ type structure.

(2) Evaluation of charge and discharge performance when the electrode material was used for positive electrode of lithium secondary battery:

A flat plate type battery was made using the resulting particles C2 and was subjected to a charge and discharge test by carrying out constant current and constant voltage charging and constant current discharging under the same conditions as in Comparative Example 1.
The discharge capacities at 10th and 20th cycles were 182 and 178 mAh/g, respectively, which showed nearly the same characteristics as in Comparative Example 1.

(3) Evaluation of safety:

Measurement of sealed type DSC was conducted in the same manner as in Comparative Example 1, except that particles C2 were used in place of the compound particles C1. The total calorific value based on the sum of the weight of the charged positive electrode mix and the weight of the electrolyte solution was 580 mJ/mg, which showed nearly the same safety as in the case of using the compound particles C1.

(4) Measurement of MAS-NMR spectrum of aluminum 27:

The results of measurement under the condition 1 are shown in Table 1. In the case of using this sample, the main peak A was observed at the chemical shift of 1 ppm and the main peak B was observed at the chemical shift of 58 ppm. Furthermore, when the intensity of the main peak A was assumed to be 100, the relative intensity of the main peak B was 95.

Comparative Example 3

(1) Synthesis of electrode material:

The compound particles P1 and $\alpha$-LiAlO$_2$ fine particles (manufactured by Sumitomo Chemical Co., Ltd.; BET specific surface area: 37 m$^2$/g) were weighed so that the molar ratio was Ni : Al = 0.90 : 0.07 and mixed by a method of rotating the container without using nylon-coated steel balls to deposit the $\alpha$-LiAlO$_2$ fine particles on P1, thereby to obtain particles (hereinafter referred to as "particles C3") which were used as an electrode material for non-aqueous secondary battery. It was confirmed by powder X-ray diffraction that the resulting particles C3 had an $\alpha$-NaFeO$_2$ type structure.

(2) Evaluation of charge and discharge performance when the electrode material was used for positive electrode of lithium secondary battery:

A flat plate type battery was made using the resulting particles C3 and was subjected to charge and discharge test by carrying out constant current and constant voltage charging and constant current discharging under the same conditions as in Comparative Example 1.

The discharge capacities at 10th and 20th cycles were 196 and 190 mAh/g, respectively, which were greater than in Comparative Example 1.

(3) Evaluation of safety:

Measurement of sealed type DSC was conducted in the same manner as in Comparative Example 1, except that particles C3 were used in place of the compound particles C1. The total calorific value based on the sum of the weight of the charged positive electrode mix and the weight of the electrolyte solution was 610 mJ/mg, which showed that the safety was not improved as compared with the case where the compound particles C1 were used.

(4) Measurement of MAS-NMR spectrum of aluminum 27:

The results of measurement under condition 2 on the intensity ratio of the main peak A and the nearest spinning sideband of the main peak A are shown in Table 2. In the case of this sample, R/r was 7.7.

Table 1

|  | Conditions of measurement | The number of spinning (kHz) | Chemical shift of main peak A (ppm) | Chemical shift of main peak B (ppm) | Relative intensity of main peak B (Note) |
|---|---|---|---|---|---|
| Example 1 | Condition 1 | 10 | -1 | Not observed | Main peak B was not observed |
| Comparative Example 2 | Condition 1 | 10 | 1 | 58 | 95 |
| (Note) Relative intensity when the intensity of the main peak A was assumed to be 100. | | | | | |

Table 2

|  | Conditions of measurement | The number of spinning (kHz) | R or r | R/r |
|---|---|---|---|---|
| Standard $\alpha$-alumina | Condition 2 | 5 | 0.087 | Standard |
| Example 1 | Condition 2 | 5 | 0.973 | 11.1 |
| Comparative Example 1 | Condition 2 | 5 | Main peak was not observed | Main peak was not observed |
| Comparative Example 3 | Condition 2 | 5 | 0.672 | 7.7 |

When the electrode materials for non-aqueous secondary batteries of the present invention are used for non-aqueous secondary batteries, non-aqueous secondary batteries improved in safety with maintaining capacity and cycle characteristics can be obtained, and the present invention is industrially very useful.

Having thus described the present invention, it is readily apparent that various modifications can be made by those who are skilled in the art without departing from the scope of this invention. It is intended that the invention embrace these equivalents within the scope of the claims that follow.

**Claims**

1. An electrode material for non-aqueous secondary batteries comprising an active material for non-aqueous secondary batteries and a coating material, wherein at least a part of the active material is coated with the coating material, the coating material comprises a coating compound containing at least aluminum and oxygen, and a peak originating from aluminum 27 in a solid nuclear magnetic resonance spectrum measured by spinning a sample of the coating material about a magic angle axis satisfies conditions shown in the following (1) and (2):

(1) when the chemical shift of a main peak of $\alpha$-alumina is assumed to be 0 ppm, there is one main peak at -3 - +5 ppm (referred to as main peak A), and intensity of a main peak at 50 - 100 ppm (referred to as main peak B) is less than 20% of intensity of the main peak A or the main peak B is not present, and

(2) when measurement is conducted with spinning the sample so that an interval between a main peak and its nearest spinning sideband is in the range of not less than 50 ppm and not more than 100 ppm, a value obtained by dividing intensity of the nearest spinning sideband on higher magnetic field of the main peak A by intensity of the main peak A is not less than 9 times compared with a value obtained by dividing intensity of the nearest spinning sideband on higher magnetic field of a main peak obtained by subjecting $\alpha$-alumina to measurement at identical magnetic field and identical spinning frequency as in measurement of the sample by intensity of main peak of $\alpha$-alumina.

2. An electrode material according to claim 1, wherein the coating compound further comprises at least one element selected from the group consisting of alkali metal elements and transition metal elements.

3. An electrode material according to claim 2, wherein the alkali metal element is Li.

4. An electrode material according to claim 2 or 3, wherein the transition metal element is at least one selected from the group consisting of Ti, V, Cr, Mn, Fe, Co, Ni, Cu, Ag and Zn.

5. An electrode material according to any one of claims 1-4, wherein a molar ratio of all metals other than aluminum and alkali metal to aluminum which is obtained by a photoelectron spectroscopic method is not more than 2.0.

6. An electrode material according to any one of claims 1-5, wherein the active material is a composite oxide which comprises Li and at least one selected from the group consisting of Ni, Co and Mn, and has an $\alpha$-NaFeO$_2$ type crystal structure.

7. An electrode material according to any one of claims 1-5, wherein the active material is a composite oxide which comprises Li and Mn and has a spinel type crystal structure.

8. A non-aqueous secondary battery which comprises an electrode material of any one of claims 1-7.

9. A method for producing an electrode material of any one of claims 1-7 which comprises coating particles of an active material for non-aqueous secondary batteries with metallic Al or a compound containing Al and then heat-treating the coated active material.